# EUROPÄISCHE PATENTANMELDUNG

(11) **EP 2 282 244 A1**
(43) Veröffentlichungstag der Anmeldung: **09.02.2011**
(21) Anmeldenummer: 10007882.3
(22) Anmeldetag: 29.07.2010
(51) Int. Cl.: G05B 19/404

(54) **Verfahren zur Bearbeitung von Werkstücken**

(30) Priorität: 04.08.2009 DE 102009036013
(71) Anmelder: Weinmann Holzbausystemtechnik GmbH, 72813 St. Johann (DE)
(72) Erfinder: Weinmann, Karl, 72813 St. Johann-Lonsingen (DE); Goller, Michael, 72525 Münsingen-Rietheim (DE); Beckereit, Christian, 76813 St. Johann (DE)
(74) Vertreter: Kohler Schmid Möbus

(57) **Zusammenfassung**

Ein Verfahren zur Bearbeitung von Werkstücken in einer Werkzeugmaschine, nach dem das Werkstück (10) im Bereich des Bearbeitungsaggregats der Werkzeugmaschine vermessen und Fehler in Lage und/oder Form des Werkstücks (10) durch eine entsprechende Ansteuerung der Werkzeuge (14) und/oder des Werkstücks (10) kompensiert werden.

## Beschreibung

Bei modernen Werkzeugmaschinen ist es üblich, die Lage eines Werkstücks im Bereich der Einspannung zu vermessen. Die Lage des Werkstücks wird dabei in Bezug auf die Einspannvorrichtung bestimmt. Treten dabei Verschiebungen zu einer idealen Einspannung auf, so kann entweder die Einspannung des Werkstücks noch einmal korrigiert werden, oder aber es werden die Fertigungsdaten der nachfolgenden Bearbeitung auf die reale Position des Werkstücks umgerechnet, um sicherzustellen, dass das Werkstück fehlerfrei bearbeitet wird.

Bei Werkstücken, die bereits vorbearbeitet sind und bei denen ein nur sehr geringer Abstand zwischen Einspannung und Angriffspunkt des Werkzeugs besteht, kann mittels dieser bekannten Vermessung von Werkstücken im Bereich der Einspannung die Fertigungsgenauigkeit ausreichend gewährleistet und eine hohe Ausschussquote verhindert werden.

Insbesondere bei längeren Werkstücken, die aus einem Naturmaterial wie Holz bestehen oder die aufgrund vorhergehender Bearbeitungsschritte thermischen oder mechanischen Spannungen ausgesetzt waren, ist die Abweichung der Werkstücksposition bzw. seiner Form von den Idealwerten am Angriffspunkt des Werkzeugs deutlich unterschiedlich zu der Abweichung im Einspannbereich. Insbesondere Krümmungen des Werkstücks können dazu führen, dass mit dem bisher bekannten Einmessverfahren trotz Korrektur der Fertigungsdaten einer CNCgesteuerten Werkzeugmaschine Ausschussware im größeren Umfang produziert wird. Gerade bei schrägen Sägenschnitten an gekrümmten Werkstücken treten sowohl Fehler des Schnittwinkels als auch der Länge der Schnittfläche auf. Sollen solchermaßen bearbeitete Werkstücke später mit anderen Werkstücken zusammengefügt werden, kann der fehlerhaft eingebrachte Sägeschnitt dazu führen, dass das Werkstück unbrauchbar wird.

Der vorliegenden Erfindung liegt daher die Aufgabe zugrunde, eine Möglichkeit zu schaffen, auch in sich verformte, insbesondere gekrümmte Werkstücke in einer Werkzeugmaschine weitgehend fehlerfrei zu bearbeiten.

Die Aufgabe wird gelöst mit einem Verfahren zur Bearbeitung von Werkstücken in einer Werkzeugmaschine, das gekennzeichnet ist durch die Schritte:
- Einspannen des Werkstücks in der Werkzeugmaschine;
- Vermessen des Werkstücks und/oder seiner Position im Bereich des oder der Werkzeuge;
- Vergleich der Messdaten mit Solldaten für das Werkstück;
- Ansteuerung des oder der Werkzeuge und/oder einer Werkstückbewegungseinrichtung in Abhängigkeit von der Differenz zwischen den Messdaten und den Solldaten derart, dass durch die relative Positionierung und/oder Bewegung des oder der Werkzeuge in Bezug auf das Werkstück der Einfluss der Abweichung der Messdaten von den Solldaten auf das Bearbeitungsergebnis zumindest teilweise kompensiert wird.

Im Gegensatz zu den Einmessverfahren bekannter Werkzeugmaschinen wird nach dem erfindungsgemäßen Verfahren das Werkstück nicht mehr an der Einspannvorrichtung, sondern im Bereich des oder der Werkzeuge vermessen. Damit lassen sich eventuelle Abweichungen des Werkstücks hinsichtlich seiner Lage in der Werkzeugmaschine und/oder seiner Form an derjenigen Stelle erfassen, an der später auch das Werkzeug ansetzt.
Es können daher Positions- oder Formfehler von Werkstücken mit sehr viel höherer Genauigkeit im Bearbeitungsergebnis kompensiert werden als mit den bekannten Verfahren. Der Einsatz des erfindungsgemäßen Verfahrens ist daher insbesondere für Holzbearbeitungsmaschinen von Vorteil, da Werkstücke aus Holz aufgrund ihrer relativ inhomogenen Materialbeschaffenheit stärker zu Krümmungen oder dergleichen neigen als beispielsweise Werkstücke aus Metall.

Um die spätere Bearbeitung des Werkstücks durch das oder die Werkzeuge nicht zu behindern, kann die Messeinrichtung für das Werkstück vorzugsweise nur für den eigentlichen Messvorgang in den Bearbeitungsbereich hineinbewegt und anschließend wieder herausbewegt werden.

Als Messmethode für die Werkstücksposition und die Form bzw. die Maße des Werkstücks können sämtliche bekannten Messverfahren eingesetzt werden. Vorzugsweise kann die Vermessung des Werkstücks mechanisch oder optisch erfolgen. Zur mechanischen Vermessung können beispielsweise Tastköpfe vorgesehen sein, die gegen das Werkstück an verschiedenen Stellen der Oberfläche des Werkstücks anstellbar sind. Als Referenzpunkt für die Messung kann jeder beliebige feststehende Punkt der Werkzeugmaschine im Bereich des Bearbeitungsaggregats herangezogen werden.

Anstelle der mechanischen Vermessung mittels eines oder mehrerer Tastköpfe kann auch ein Laserscannen des Werkstücks durchgeführt werden. Mit diesem Verfahren lässt sich eine ausgesprochen präzise Abbildung des Werkstücks und seiner Lage gewinnen, wodurch auch die Kompensation der Positions- und/oder Formfehler des Werkstücks im Bearbeitungsergebnis mit hoher Qualität erfolgen kann.

Bei einer bevorzugten Ausgestaltung des erfindungsgemäßen Verfahrens kann die Ansteuerung des oder der Werkzeuge oder der Werkstückbewegungseinrichtung derart erfolgen, dass die Abweichung der Messdaten von den Solldaten des Werkstücks hinsichtlich mindestens einer Eigenschaft des Bearbeitungsergebnisses wie Schnittwinkel, Bearbeitungstiefe, Bearbeitungslänge oder dergleichen vollständig kompensiert wird.

Je nach Abweichung der Lage oder Form des Werkstücks vom Idealzustand lassen sich diese Abweichungen im Bearbeitungsergebnis nicht vollständig kompensieren. In diesen Fällen muss entschieden werden, welches Kriterium des Bearbeitungsergebnisses zwingend erfüllt sein muss, um das bearbeitete Werkstück anschließend weiter verwenden zu können. Es wird dann durch eine entsprechende Ansteuerung der Werkzeuge oder der Werkstückbewegung versucht, diese Eigenschaft vollständig entsprechend dem Idealzustand zu erzielen, während die Erfüllung anderer Eigenschaften demgegenüber zweitrangig behandelt wird.

Gerade bei schrägen Sägeschnitten an längeren Hölzern ist in manchen Fällen die Länge der Schnittfläche entscheidender als der Winkel des Schnitts oder umgekehrt. Kommt es auf beide Eigenschaften an, so kann Bearbeitungsergebnis annähernd erfüllt sind.

Die Erfindung betrifft außerdem eine Werkzeugmaschine für die Bearbeitung von Werkstücken, insbesondere von Werkstücken aus Holz, mit einer Spanneinrichtung für das Werkstück und mindestens einem Bearbeitungsaggregat mit einem oder mehreren Werkzeugen und mit einer Einrichtung zur Werkstückvermessung, die dadurch gekennzeichnet ist, dass das Werkstück im Bereich des Bearbeitungsaggregats mit Hilfe der Einrichtung zur Werkstückvermessung vermessbar ist. Die Einrichtung zur Werkstückvermessung kann dazu einen oder mehrere gegen das Werkstück anstellbare Tastköpfe oder einen Laserscanner aufweisen. Auch eine optische Vermessung des Werkstück und seiner Position mittels Kameras ist möglich.

In allen Fällen ist die Einrichtung zur Werkstückvermessung mit der Steuerung zumindest des Bearbeitungsaggregats verbunden, wobei die Auswertung der Messsignale in einer Auswerteeinrichtung vorgenommen wird. Dort findet der Vergleich der Messdaten mit den Solldaten eines idealen und fehlerfrei eingespannten Werkstücks statt. Aufgrund der festgestellten Abweichung zwischen Mess- und Solldaten werden die Ansteuerungsdaten für das oder die Werkzeuge entsprechend modifiziert. Wird in der Werkzeugmaschine das Werkstück an feststehenden Werkzeugen vorbeibewegt, so kann auf gleiche Weise eine Veränderung der Bewegungsdaten für das Werkstück erfolgen, sodass im Bearbeitungsergebnis eine zumindest weitgehende Kompensation der Lage- oder Formfehler des Werkstücks erfolgen kann.

Nachfolgend wird anhand der Zeichnung das erfindungsgemäße Verfahren in einer schematischen Darstellung näher verdeutlicht.

Es zeigen:
- Fig. 1: eine schematische Darstellung einer Einspannvorrichtung einer Werkzeugmaschine mit Werkstückmesseinrichtung und Werkzeug;
- Fig. 2: eine Prinzipdarstellung einer Werkstückvermessung und Ansteuerung eines Werkzeugs.

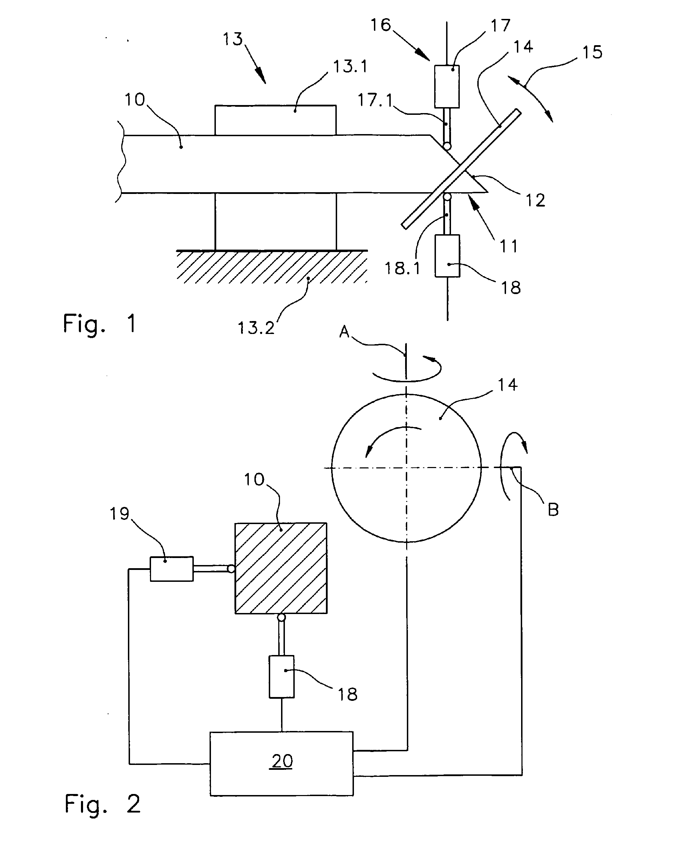

Fig. 1 zeigt ein Werkstück 10 in Form eines Holzbalkens, der an seiner Spitze 11 in einem früheren Bearbeitungsschritt mit einem schrägen Sägeschnitt 12 versehen worden ist. Das Werkstück 10 ist in einer Spanneinrichtung 13 gespannt, von der zwei Spannbacken 13.1 und 13.2 dargestellt sind. Die Spannbacke 13.2 ist feststehend, während die Spannbacke 13.1 geöffnet werden kann. Weiter ist ein Werkzeug 14, hier ein Sägeblatt, dargestellt, mit dem ein zweiter, schräg verlaufender Sägeschnitt in das Werkstück 10 eingebracht werden soll. Das Sägeblatt 14 lässt sich im dargestellten Beispiel in Richtung des Doppelpfeils 15 verschwenken, sodass sich der Schnittwinkel des Sägeschnitts einstellen lässt.

Fig. 1 zeigt außerdem eine Einrichtung 16 zur Vermessung des Werkstücks 10. Die Einrichtung 16 ist dabei im Bereich des Sägeblatts 14, d. h. im Bereich der nächstfolgenden Bearbeitung des Werkstücks 10, angeordnet. Von der Messeinrichtung 16 sind zwei Tastköpfe 17 und 18 dargestellt, die jeweils Spitzen 17.1 und 18.1 aufweisen, die gegen die Oberfläche des Werkstücks 10 bewegbar sind. Vorzugsweise können vier Tastköpfe für alle Seiten des Werkstücks 10 vorgegeben sein. Auf diese Weise lässt sich sowohl die Position des Werkstücks 10 als auch dessen Abmessung im Bereich des Kreissägeblatts 14 feststellen. Eventuelle Abweichungen der Messdaten von vorgegebenen Solldaten können zumindest hinsichtlich des Schnittwinkels dadurch kompensiert werden, dass das Sägeblatt 14 entsprechend in eine der Richtungen des Doppelpfeils 15 verschwenkt wird. Auch eine Kompensation von Fehlern durch eine Veränderung des Anfangspunktes des Sägeschnitts ist möglich.

In Fig. 2 ist die Kompensation eventueller Werkstückfehler oder Einspannfehler des Werkstücks auf das Bearbeitungsergebnis näher verdeutlicht. Das Werkstück 10 ist in der schematischen Figur nun von vorn zu sehen. Von der Messeinrichtung 16 sind wieder der untere Tastkopf 18 sowie ein in Fig. 1 nicht zu sehender seitlicher Tastkopf 19 dargestellt. Sämtliche Tastköpfe 17, 18, 19 messen den Abstand der Oberflächen des Werkstücks 10 gegenüber einem Referenzpunkt, der nicht eingezeichnet ist, aber an beliebiger ortsfester Stelle an der Maschine angeordnet sein kann.

Die Messdaten werden anschließend an eine zentrale Auswerte- und Steuereinrichtung 20 der Werkzeugmaschine übermittelt. Dort findet ein Vergleich der Messdaten mit in einem Speicher der Vorrichtung 20 hinterlegten Solldaten über die Abmessungen und Position des Werkstücks 10 statt. Aufgrund eventuell festgestellter Abweichungen der Messdaten vom Idealzustand wird anschließend das Sägeblatt 14, das um die beiden Achsen A und B schwenkbar ist, bezüglich des Schwenkwinkels um diese Achsen sowie bezüglich des Angriffspunktes des Sägeblatts 14 am Werkstück 10 derart angesteuert, dass der Einfluss der Abweichung des Werkstücks 10 vom Idealzustand auf das gewünschte
Bearbeitungsergebnis möglichst minimiert wird.

Die Kompensation der gemessenen Abweichungen kann sich dabei auch nur auf eine der verschiedenen Eigenschaften des Bearbeitungsergebnisses erstrecken. Alternativ kann die Ansteuerung des Sägeblatts 14 auch derart erfolgen, dass ein Kompromiss zwischen sämtlichen gewünschten Eigenschaften des Bearbeitungsergebnisses des Werkstücks 10 erzielt wird.

## Patentansprüche

1. Verfahren zur Bearbeitung von Werkstücken (10) in einer Werkzeugmaschine, **gekennzeichnet durch** die Schritte:
- Einspannen des Werkstücks (10) in der Werkzeugmaschine;
- Vermessen des Werkstücks (10) und/oder seiner Position im Bereich des oder der Werkzeuge (14);
- Vergleich der Messdaten mit Solldaten für das Werkstück (10);
- Ansteuerung des oder der Werkzeuge und/oder einer Werkstückbewegungseinrichtung in Abhängigkeit von der Differenz zwischen den Messdaten und den Solldaten derart, dass **durch** die relative Positionierung und/oder Bewegung des oder der Werkzeuge (14) in Bezug auf das Werkstück (10) der Einfluss der Abweichung der Messdaten von den Solldaten auf das Bearbeitungsergebnis zumindest teilweise kompensiert wird.

2. Verfahren nach Anspruch 1, **dadurch gekennzeichnet, dass** die Ansteuerung des oder der Werkzeuge (14) oder der Werkstückbewegungseinrichtung derart erfolgt, dass die Abweichung der Messdaten von den Solldaten des Werkstücks (10) hinsichtlich mindestens einer Eigenschaft des Bearbeitungsergebnisses wie Schnittwinkel, Bearbeitungstiefe, Bearbeitungslänge oder dergleichen vollständig kompensiert wird.

3. Verfahren nach Anspruch 1, **dadurch gekennzeichnet, dass** die Ansteuerung des oder der Werkzeuge (14) oder der Werkstückbewegungseinrichtung derart erfolgt, dass die Abweichung der Messdaten von den Solldaten des Werkstücks (10) hinsichtlich sämtlicher gewünschter Eigenschaften des Bearbeitungsergebnisses in Form eines Kompromisses kompensiert wird.

4. Verfahren nach einem der Ansprüche 1 bis 3, **dadurch gekennzeichnet, dass** die Vermessung des Werkstücks (10) mechanisch und/oder optisch erfolgt.

5. Verfahren nach einem der Ansprüche 1 bis 4, **dadurch gekennzeichnet, dass** die Vermessung des Werkstücks (10) mittels gegen die Werkstückoberfläche bewegbarer Tastköpfe (17, 18, 19) erfolgt.

6. Verfahren nach einem der Ansprüche 1 bis 4, **dadurch gekennzeichnet, dass** die Vermessung des Werkstücks (10) mittels Laserscannens erfolgt.

7. Werkzeugmaschine zur Bearbeitung von Werkstücken, insbesondere von Werkstücken aus Holz, mit einer Spanneinrichtung (13) für das Werkstück (10) und mindestens einem Bearbeitungsaggregat mit einem oder mehreren Werkzeugen (14) und mit einer Einrichtung (16) zur Werkstückvermessung, **dadurch gekennzeichnet, dass** das Werkstück (10) im Bereich des Bearbeitungsaggregats mit Hilfe der Einrichtung (16) zur Werkstückvermessung vermessbar ist.

8. Werkzeugmaschine nach Anspruch 7, **dadurch gekennzeichnet, dass** die Einrichtung (16) zur Vermessung des Werkstücks (10) in den Bereich des Bearbeitungsaggregats hinein und aus diesem heraus bewegbar ist.

9. Werkzeugmaschine nach Anspruch 7 oder 8, **dadurch gekennzeichnet, dass** die Einrichtung (16) zur Vermessung des Werkstücks (10) abschaltbar ist.
